# EUROPEAN PATENT APPLICATION

(11) **EP 3 649 872 A1**
(43) Date of publication of application: **13.05.2020**
(21) Application number: 17916991.7
(22) Date of filing: 03.07.2017
(51) Int. Cl.: A23L 3/00, A23L 3/3562, A23L 3/3571, A23L 5/10

(54) **METHOD FOR MANUFACTURING PROCESSED FOOD**

(71) Applicant: En Otsuka Pharmaceutical Co., Ltd., Hanamaki-shi, Iwate 025-0312 (JP)
(72) Inventor: HONMA, Yuji, Hanamaki-shi Iwate 025-0312 (JP)
(74) Representative: Forstmeyer, Dietmar
(86) International application number: PCT/JP2017/024366
(87) International publication number: WO 2019/008641

(57) **Abstract**

Provided is a method for producing a processed food, in which the generation of a sulfur smell or the imparting of an unpleasant flavor like an accumulated sulfur smell is suppressed.

[Means for Resolution]

Provided is a method for producing a processed food in which the generation of a sulfur smell is suppressed, including the following steps (A) and (B):
(A) a step of bringing a transglutaminase and/or a reducing sugar into contact with a solid food material containing a protein as a main nutritional component; and
(B) a step of subjecting the food material after the step (A) to a heat sterilization treatment.

## Description

### TECHNICAL FIELD

The present invention relates to a method for producing a processed food in which the generation of a sulfur smell is suppressed. It more specifically relates to a method for producing a processed food containing a food material that contains a protein as a main nutritional component, such as a meat, a fishery product, or a bean, the method including a step of bringing a transglutaminase (hereinafter sometimes simply referred to as TG) and/or a reducing sugar into contact with the food material.

### BACKGROUND ART

In recent years, for the preservation of foods, a technique of performing a heat sterilization treatment in a sealed container, such as retort heating, has been employed. Retort heating is advantageous in that the treatment is possible with simple packaging, and the food can be preserved for a long period of time. However, it is known that as a result of retort heating, which is high-temperature, high-pressure heating, retort smells or retort flavors occur in the food. Such retort smells include a damp smell believed to be from the oil/fat of the food material, the smell of the packaging material caused by the transfer of package components, and also those caused by the reaction of decomposed original aroma components of the food material with other substances, for example, and a burnt smell resulting from the heating of a seasoning liquid and the like are also included. In particular, in the case where the food material abundantly contains sulfur-containing amino acids, there have been problems in that sulfur-containing compounds, such as hydrogen sulfide, are generated as a result of retort heating, whereby a sulfur smell occurs, or an unpleasant flavor like an accumulated sulfur smell also occurs in the food material itself.

In order to solve these problems, for example, Patent Document 1 discloses that a packaging material produced by applying a coating agent composed of a zinc compound or the like, followed by drying and the like, is used to adsorb retort smells, thereby suppressing retort smells in a food material itself.

Patent Document 2 discloses a method in which in the preparation of the ingredients of *Oyako-don* (chicken-and-egg rice bowl) or *Chuka-don* (Chinese stir-fry rice bowl), plain-boiled bamboo shoots, and the like, a yeast extract is added to reduce retort smells in a food heat-sterilized in a sealed container, thereby improving the flavor of the food.

Non-Patent Document 1 discloses that in the production of a retort-packaged boiled fish paste, a reducing sugar such as maltose or lactose is added to suppress the generation of hydrogen sulfide at the time of retort packaging. Also in Patent Document 3, it is disclosed that in the production of a liquid seasoning containing a dry fish powder, a saccharide such as glucose is added to suppress the smell of heat deterioration.

In addition, Patent Document 4 discloses that when a reducing sugar is bonded to an egg-white protein, a chemically modified egg white having an SH group content within a certain range and having a reduced hydrogen sulfide smell is obtained. In Patent Document 5, it is disclosed that for the purpose of suppressing the generation of an offensive smell peculiar to a retort-packaged cooked rice and the deterioration of the flavor, glucose oxidase and glucose are made to coexist at the time of the production of a retort-packaged cooked rice.

Further, Patent Document 6 discloses that in the production of a retort-packaged cooked rice, a transglutaminase is added to modify an offensive flavor. Also in Patent Document 7, as a processed rice product having excellent instant properties and a method for producing the same, it is disclosed that a protein and/or an enzyme and an oligosaccharide are added to a composition containing grains as a main component. Then, transglutaminases are mentioned as such enzymes, and sucrose is mentioned as an oligosaccharide.

Like this, for the suppression of retort smells and retort flavors resulting from retort heating, various methods have been developed. However, use of a specific packaging material is expensive. In addition, in the case where the food material to be processed is large, the substance causing retort smells contained inside the food material cannot be adsorbed. Therefore, the problem that the retort smells or retort flavors remain at the time of eating cannot be solved.

In addition, although a yeast extract has been widely used for the production of a processed food as an additive that imparts richness in taste and a flavor, its color and smell are strong. Thus, unless the addition amount and the like are well adjusted according to the food material, it is highly possible that the aroma or flavor of the yeast extract itself is added to the food material.

Then, also in the case where a reducing sugar, a transglutaminase, and the like are added, food materials in such a case are fishery products in the form of pastes or powders, eggs, rice, and the like, and it has been difficult to sufficiently say that a processed food having suppressed retort smells or retort flavors can be produced even from a solid food material of a certain size.

### CITATION LIST

### PATENT LITERATURE

Patent Document 1: Patent No. 5947680
Patent Document 2: JP-A-2006-109720
Patent Document 3: JP-A-2015-188375
Patent Document 4: Patent No. 3184147
Patent Document 5: JP-A-5-316974
Patent Document 6: Patent No. 2982390
Patent Document 7: JP-A-2005-192457

### NON PATENT LITERATURE

Non-Patent Document 1: YAMAZAWA Masakatsu, SHIGA Ichizo (1985), Preventive effect of reducing sugars on the production of hydrogen sulfide in retorted Kamaboko, Bulletin of Japanese Society of Scientific Fisheries 51(9), 1545-1550.

### SUMMARY OF INVENTION

### TECHNICAL PROBLEM

An object of the invention is to provide a method for producing a processed food, which is capable of suppressing the generation of, of retort smells and retort flavors, particularly a sulfur smell from a sulfur-containing compound, and further capable of suppressing the imparting of an unpleasant flavor like an accumulated sulfur smell to a food material. More specifically, the object is to provide a method for producing a processed food, in which the generation of a sulfur smell or the imparting of an accompanying unpleasant flavor is suppressed, using a solid food material of a certain size containing a protein as a main nutritional component, such as a meat, a fishery product, or a bean.

### SOLUTION TO PROBLEM

The present inventors have conducted extensive research in light of the above situation. As a result, they have found that in the production of a processed food, when a step of bringing a transglutaminase and/or a reducing sugar into contact with such a food material is included, a processed food in which the generation of a sulfur smell is suppressed can be produced, and thus accomplished the invention.

Further, the present inventors have also found that when an enzyme and also a transglutaminase and/or a reducing sugar are brought into contact with such a food material, a softened processed food in which the generation of a sulfur smell is suppressed can be produced.

A processed food or softened processed food produced by such a method of the invention did not have an unpleasant flavor like an accumulated sulfur smell, and such a processed food was favorable for eating.

That is, the invention for solving the above problems relates to a method for producing a processed food and the like shown in the following (1) to (11).
(1) A method for producing a processed food in which the generation of a sulfur smell is suppressed, including the following steps (A) and (B):
   (A) a step of bringing a transglutaminase and/or a reducing sugar into contact with a solid food material containing a protein as a main nutritional component; and
   (B) a step of subjecting the food material after the step (A) to a heat sterilization treatment.
(2) A method for producing a processed food in which the generation of a sulfur smell is suppressed, including the following steps (C) and (D):
   (C) a step of bringing an enzyme and also a transglutaminase and/or a reducing sugar into contact with a solid food material containing a protein as a main nutritional component; and
   (D) a step of subjecting the food material after the step (C) to a heat sterilization treatment.
(3) The method for producing a processed food according to the above (2), wherein the enzyme is one or more member selected from proteases, cellulases, or hemicellulases.
(4) The method for producing a processed food according to the above (3), wherein the proteases are endo-type proteases.
(5) The method for producing a processed food according to any one of the above (1) to (4), wherein in the step (A) or (C), *sake* (rice wine) and/or *shochu* (distilled spirit) is further brought into contact.
(6) The method for producing a processed food according to any one of the above (1) to (5), wherein the heat sterilization treatment is a retort treatment.
(7) The method for producing a processed food according to any one of the above (1) to (6), wherein the food material containing a protein as a main nutritional component is a meat, a fishery product, or a bean.
(8) The method for producing a processed food according to any one of the above (1) to (7), wherein the food material is any one of the following (a) to (c):
   (a) in the case of a meat, 0.1 cm or more in thickness and 1.0 cm or more in longest side;
   (b) in the case of a fishery product, 0.1 cm or more in thickness and 1.0 cm or more in longest side; and
   (c) in the case of a bean, 4.9 mm or more in longest diameter.
(9) The method for producing a processed food according to any one of the above (2) to (8), wherein the produced processed food is a processed food that maintains the original appearance of the food material and has been softened to a hardness that allows for uniform crushing with the tongue alone.
(10) The method for producing a processed food according to the above (9), wherein the hardness that allows for uniform crushing with the tongue alone is any one of the following 1) to 3):
   1) in the case where the food material is a fishery product, the fishery product has a hardness of 5.0 × 10⁴ Pa or less;
   2) in the case where the food material is a meat, the meat has a hardness of 6.0 × 10⁴ Pa or less; and
   3) in the case where the food material is a bean, the bean has a hardness of 6.0 × 10⁴ Pa or less.
(11) A processed food obtainable by the method according to any one of the above (1) to (10).

### ADVANTAGEOUS EFFECTS OF INVENTION

The method of the invention makes it possible to provide a processed food in which a food material containing a protein as a main nutritional component, such as a meat, a fishery product, or a bean, is solid and has a certain size, and also the generation of a sulfur smell or the imparting of an accompanying unpleasant flavor is suppressed.

Further, according to the method of the invention, a retort-packaged softened food in which the generation of a sulfur smell or the imparting of an accompanying unpleasant flavor is suppressed can also be provided as a processed food. As a result, it also becomes easy to produce a processed food intended for those with chewing or swallowing difficulties, for example.

### DESCRIPTION OF EMBODIMENTS

Hereinafter, the invention will be described in detail.

The "method for producing a processed food in which the generation of a sulfur smell is suppressed" of the invention refers to a method for suppressing a sulfur smell caused by components contained in or added to a food material at the time of production of a processed food, for example, and is a method including the following steps (A) and (B) as indispensable steps. In addition to these steps, the method may also include other steps useful for the production of a processed food.
(A) A step of bringing a transglutaminase and/or a reducing sugar into contact with a solid food material containing a protein as a main nutritional component.
(B) A step of subjecting the food material after the step (A) to a heat sterilization treatment.

The "solid food material containing a protein as a main nutritional component" herein refers to a food material in which, of nutritional components that constitute the food material, a protein is abundantly contained (STANDARD TABLES OF FOOD COMPOSITION IN JAPAN 2015 (Seventh Revised Version) (the Subdivision on Resources, the Council for Science and Technology, Ministry of Education, Culture, Sports, Science and Technology)), and refers to an animal material, such as a meat or a fishery product, or a bean, such as soybeans, not in the form of a paste, a powder, or the like, but in a certain solid form, such as the food material itself or a cut thereof.

When such a food material "contains a protein as a main nutritional component", this means that in STANDARD TABLES OF FOOD COMPOSITION IN JAPAN 2015 (Seventh Revised Version), of nutritional components that constitute the food material, a protein is contained in an amount of at least 3.6 w/w% or more, preferably 5.3 w/w% or more, and still more preferably 15. 0w/w% or more, relative to the weight of the entire food material.

Such a "solid food material containing a protein as a main nutritional component" of the invention is not limited to a fresh food material, and the food material may also be a dried product, a boiled product, a plain-boiled product, or the like, or may also be a processed product such as a bean curd, a ham, a sausage, or a fish cake.

For example, in the case where the food material of the invention is a meat, a solid meat having any one of the following sizes is preferable.
(1) In the case of chicken, it is preferable that the thickness is 0.1 cm or more, and the longest side is 1 cm or more, it is still more preferable the thickness is 0.5 cm or more, and the longest side is 1.5 cm or more, and it is particularly preferable that the thickness is 1 cm or more, and the longest side is 3 cm or more.
(2) In the case of pork, it is preferable that the thickness is 0.1 cm or more, and the longest side is 1 cm or more, it is still more preferable the thickness is 0.5 cm or more, and the longest side is 1.5 cm or more, and it is particularly preferable that the thickness is 1 cm or more, and the longest side is 3 cm or more.
(3) In the case of beef, it is preferable that the thickness is 0.1 cm or more, and the longest side is 1 cm or more, it is still more preferable the thickness is 0.5 cm or more, and the longest side is 1.5 cm or more, and it is particularly preferable that the thickness is 1 cm or more, and the longest side is 3 cm or more.

The food material of the invention should just be in a visually recognizable solid form, and thus may also be a sliced meat or the like.

In addition, in the case where the food material of the invention is a fishery product, for example, when the fishery product is mackerel, crab, or scallop, it is preferable that the thickness is 0.1 cm or more, and the longest side is 1 cm or more, it is still more preferable the thickness is 0.5 cm or more, and the longest side is 1.5 cm or more, and it is particularly preferable that the thickness is 1 cm or more, and the longest side is 3 cm or more. The food material should just be in a visually recognizable solid form, and thus may also be a sliced fishery product or the like.

Further, in the case where the food material of the invention is a bean, the bean should just be in a visually recognizable solid form, and thus may also be a split or sliced bean or the like. In the case where the bean is soybeans, soybeans having a diameter of 4.9 mm or more are preferable.

The "step of bringing a transglutaminase and/or a reducing sugar into contact" with the food material refers to a step in which they become capable of contacting the food material, and means that, for example, a transglutaminase or a reducing sugar is sprinkled over the food material, a solution containing a transglutaminase or a reducing sugar is prepared and injected into the food material, the food material is immersed in the solution, or the like.

The transglutaminase may be any of those conventionally known, or may also be a commercially available product or prepared by an original method. Examples thereof include ACTIVA TG-H, ACTIVA TG-K, ACTIVA TG-K *Shinayaka,* ACTIVA TG-M *Koshi-kiip,* ACTIVA TG-AK, ACTIVA TG-B, ACTIVA TG-S, and ACTIVA TG-B *Kona-mabushi* (all from Ajinomoto Co., Inc.). These transglutaminases may be used alone, and it is also possible to use a combination of two or more kinds.

With respect to the transglutaminase, the concentration of its solution used can be adjusted according to the food material to contact, and the solution may be used at a concentration of 0.01 w/w% to 2.0 w/w%, for example, and is particularly preferably used at a concentration of 0.05 w/w% to 1.0 w/w% .

The reducing sugar may be any of those conventionally known, or may also be a commercially available product or prepared by an original method. Examples thereof include glucose, fructose, glyceraldehyde, lactose, arabinose, maltose, ribose, and xylose. These reducing sugars may be used alone, and it is also possible to use a combination of two or more kinds.

With respect to the reducing sugar, the concentration of its solution used can be adjusted according to the food material to contact, and the solution may be used at a concentration of 0.005 w/w% to 2 w/w%, for example, and is particularly preferably used at a concentration of 0.01 w/w% to 1.5 w/w%.

In addition, the "step (B) of subjecting the food material after the step (A) to a heat sterilization treatment" refers to a step of sterilizing the food material by heating. As such a heating method, retort heating can be mentioned, for example. The temperature, time, and the like of retort heating can be adjusted according to the food material. This also applies to the "step (D) of subjecting the food material after the step (C) to a heat sterilization treatment" described below.

Further, the "method for producing a processed food in which the generation of a sulfur smell is suppressed" of the invention may also be a method including the following steps (C) and (D) as indispensable steps, and, in addition to these steps, may also include other steps useful for the production of a processed food.
(C) A step of bringing an enzyme and also a transglutaminase and/or a reducing sugar into contact with a solid food material containing a protein as a main nutritional component.
(D) A step of subjecting the food material after the step (C) to a heat sterilization treatment.

The "step of bringing an enzyme and also a transglutaminase and/or a reducing sugar into contact" with the food material refers to a step in which they become capable of contacting the food material, and means that, for example, an enzyme and also a transglutaminase or a reducing sugar are sprinkled over the food material, a solution containing an enzyme and also a transglutaminase or a reducing sugar is prepared and injected into the food material, the food material is immersed in the solution, or the like.

The enzyme may be any of those conventionally known, or may also be a commercially available product or prepared by an original method.

For example, in the case where the solid food material containing a protein as a main nutritional component is a meat or a fishery product, it is preferable to use a protease. Although it is possible to use an exo-type protease, an endo-type protease, or a combination thereof, it is particularly preferable to use an endo-type protease, which is unlikely to cause an increase in the amount of free amino acids due to the enzymatic action.

Examples of such proteases include papain, bromelain, pepsin, trypsin, ficin, chymotrypsin, cathepsin D, and cathepsin. These proteases may be used alone, and it is also possible to use a combination of two or more kinds.

The protease concentration used can be adjusted according to the food material to contact. For example, it is preferable that the enzyme is dissolved in a solvent such as water to 0.0003 w/w% to 10.0 w/w%, particularly preferably to 0.0015 w/w% to 5.0 w/w%, and used.

In addition, in the case where the solid food material containing a protein as a main nutritional component is a bean, it is preferable to use one or more member selected from cellulases or hemicellulases.

These enzymes may be used alone, and it is also possible to use a combination of two or more kinds.

The cellulase or hemicellulase concentration used can be adjusted according to the food material to contact. For example, it is preferable that the enzyme is dissolved in a solvent such as water or a citric acid buffer to 0.001 w/w% to 10 w/w%, particularly preferably to 0.05 w/w% to 5 w/w%, and used.

In the production of the processed food of the invention, in the case where a solution containing such an enzyme is used as an enzyme treatment liquid, the pH of the enzyme treatment liquid for a meat or a fishery product is preferably 8.0 or more and less than 10.5, and more preferably 9.0 or more and less than 10.5. In addition, the pH of the enzyme treatment liquid for a bean is preferably 4.0 or more and less than 7.0, and more preferably 4. 5 or more and less than 6. 0. As a result, while maintaining the flavor of the food material, the food material can be softened to a hardness that allows for crushing with the tongue. Accordingly, even elderly persons or those with swallowing or chewing difficulties can enjoy eating.

The pH of the enzyme treatment liquid is preferably adjusted by adding a pH adjuster. The pH adjuster may be any of conventionally known pH adjusters. Examples thereof include hydrochloric acid, tartaric acid, adipic acid, citric acid, gluconic acid, succinic acid, acetic acid, lactic acid, pyrophosphoric acid, fumaric acid, malic acid, carbonic acid, and phosphoric acid. Examples further include metal salts thereof, such as sodium salts, potassium salts, calcium salts, and magnesium salts. They may be used alone, and it is also possible to use a combination of two or more kinds.

In the invention, in a mixture of a transglutaminase and/or a reducing sugar and optionally an enzyme, *sake* and/or *shochu* can be further contained as an additional component. In addition, the following components can also be contained in addition to *sake* and/or *shochu.*

Examples of such additional components include seasonings, antioxidants, amine acids such as arginine, glutamine, and glycine, vitamins, minerals, and saccharides such as sucrose and trehalose.

In addition, seasonings are not particularly limited either, and examples thereof include general seasonings such as sugar, table salt, monosodium glutamate, soy sauce, and fermented soybean paste, flavoring agents, and food essences (extracts). In addition, they may be used alone, and it is also possible to use a combination of two or more kinds.

Such a mixture of a transglutaminase and/or a reducing sugar, optionally an enzyme, and further additional components may be dissolved in water or an alcohol such as ethanol and used as a solution.

In the method of the invention, in the case where an enzyme is used, it is preferable that the produced processed food is a processed food that maintains the original appearance of the food material and has been softened to a hardness that allows for uniform crushing with the tongue alone.

Here, the "original appearance of the food material" refers to a condition in which the natural color and shape as a processed food comparable to an unsoftened food (food material) are maintained. For example, in the case where the food material is a chicken breast, the phrase refers to an appearance that can be visually recognized as a chicken breast.

In addition, the "hardness that allows for uniform crushing with the tongue alone" means that when the hardness (measured value) of a retort-packaged softened food is measured using a creep meter ("RE2- 33005B" manufactured by Yamaden Co., Ltd.) under the conditions described in the Examples of the invention, the hardness is within the following numerical range.
1) In the case where the food material is a fishery product, the fishery product has a hardness of 5.0 × 10⁴ Pa or less.
2) In the case where the food material is a meat, the meat has a hardness of 6.0 × 10⁴ Pa or less.
3) In the case where the food material is a bean, the bean has a hardness of 6.0 × 10⁴ Pa or less.

Hereinafter, examples of the invention, comparative examples, and the like will be shown. However, the invention is not limited only to these examples.

### EXAMPLES

### 1. Sample

### 1) Food Material

Of food materials, chicken, pork, and beef were used as meats, and mackerel, crab, and scallop were used as fishery products. In addition, dry soybeans were used as a bean.

### 2) Treatment Liquid

### (1) Reducing Sugar

Glucose or maltose was used.

(2) As a transglutaminase (TG), ACTIVA TG-H (Ajinomoto Co., Inc.) was used.

### (3) Enzyme

As endo-type proteases, papain (Amano Enzyme, Inc.) and bromelain (Amano Enzyme, Inc.) were used.

As an exo-type protease, peptidase (Amano Enzyme, Inc.) was used.

In addition, a cellulase (Yakult Pharmaceutical Industry Co., Ltd.) and/or a hemicellulase (Amano Enzyme, Inc.) was used.

### (4) Additive

Cooking *sake* (Takara Shuzo Co., Ltd.) or *shochu* (Takara Shuzo Co., Ltd.) was used.

### 2. Evaluation Method

### 1) Sensory Evaluation (n = 10)

The smell of each of the produced processed foods (retort-packaged foods, retort-packaged softened foods) was evaluated according to the following criteria. In addition, with respect to retort-packaged softened foods, the appearance and softness were also evaluated according to the following evaluation criteria, and, based on the evaluation results, their overall suitability as processed foods of the invention was evaluated.

Incidentally, in the case where the processed food was a retort-packaged food, when no sulfur smell was perceived, and the flavor and appearance were excellent, such a retort-packaged food was rated as ideal in the invention. In addition, in the case where the processed food was a retort-packaged softened food, when it further had a hardness that allowed for easy, uniform crushing with the tongue, such a retort-packaged softened food was rated as ideal in the invention.

### <Evaluation Criteria>

### (1) Smell

Score 5: Unpleasant smells, such as a sulfur smell, are not perceived, and a smell favorable as a food is maintained. The condition is suitable as a processed food.
Score 4: Unpleasant smells, such as a sulfur smell, are hardly perceived, and a smell favorable as a food is maintained. The condition is suitable as a processed food.
Score 3: Unpleasant smells, such as a sulfur smell, are slightly perceived, but a smell favorable as a food is maintained. The condition is suitable as a processed food.
Score 2: Unpleasant smells, such as a sulfur smell, are perceived, and the condition is unsuitable as a processed food.
Score 1: Unpleasant smells, such as a sulfur smell, are strongly perceived, and the condition is unsuitable as a processed food.

### (2) Appearance

Score 5: No change is seen in the appearance, and the natural color and shape as a processed food comparable to an unsoftened food are maintained.
Score 4: A slight change is seen in the appearance, but the natural color and shape as a processed food comparable to an unsoftened food are maintained.
Score 3: A change is seen in the appearance, but the natural color and shape as a processed food comparable to an unsoftened food are maintained.
Score 2: A change is seen in the appearance, and the natural color and shape as a processed food comparable to an unsoftened food have been lost.
Score 1: An extreme change is seen in the appearance, and the natural color and shape as a processed food comparable to an unsoftened food have been lost.

### (3) Softness

Score 5: Easily uniformly crushable with the tongue alone.
Score 4: Uniformly crushable with the tongue alone.
Score 3: Crushable with the tongue alone, but crushing takes some force.
Score 2: Partially not crushable with the tongue alone.
Score 1: Entirely hard, uncrushable with the tongue alone, and chewing is required.

### (4) Overall Evaluation

S: Scores 4 or more in all of the evaluation items of smell, appearance, and softness.
A: Scores 3 or more in all of the items of smell, appearance, and softness, and scores 4 or more in any two items.
B: Scores 3 or more in all of the items of smell, appearance, and softness and scores 4 or more in any one item.
C: Scores 3 or more and less than 4 in all of the items of smell, appearance, and softness.
F: Scores less than 3 in one or more of the items of smell, appearance, and softness.

When the overall evaluation is S to C, such processed foods are suitable in the invention, but those with F are unsuitable.

### 2) Hardness Measurement

The hardness (measured value) of a retort-packaged softened food was measured using a creep meter ("RE2- 33005B" manufactured by Yamaden Co., Ltd.). The hardness measurement was performed with n = 10, and their average was defined as the hardness (measured value).

### (1) Meats, Fishery Products

A produced retort-packaged softened food was packed in a container with a circular opening having a diameter of 4 cm and a depth of 1.5 cm, and a plunger having a diameter of 20 mm was pushed down vertically thereon at a rate of 10 mm/s. The maximum load on the plunger (N) to the point of 66.7% compression was divided by the area of the plunger (π × 2 = 0.01 m × 0.01 m × 3.14), and the quotient was defined as the hardness (Pa). Meats were each cut to a thickness of 1.5 cm, then cut out with a cutting die having a diameter of 39 mm, packed, and subjected to the measurement. Mackerel was cut out with a cutting die having a diameter of 39 mm and subjected to the measurement. Crab was cut, packed to such a degree that the bottom of the container was covered, and subjected to the measurement. Scallop was directly used for the measurement without cutting. The measurement temperature was set at 20±2°C.

### (2) Beans

With respect to a produced retort-packaged softened food (beans), a plunger having a diameter of 3 mm was pressed from the upper end of one bean to 70% the thickness at a compression rate of 10 mm/sec, while the clearance was set so that 30% of the lower end portion would remain, and the compression stress (Pa) was measured. Incidentally, the clearance herein refers to the distance from the distal end of the plunger to the zero point (i.e., the lower end of the sample) at the maximum compression of the sample. The measurement temperature was set at 20±2°C.

### <Production of Retort-Packaged Food>

### [Example 1]

### 1. Treatment

### 1) Sliced Beef Round

In each of treatment liquids prepared by dissolving TG and/or glucose in ion exchange water to the concentrations shown in Table 1, a raw sliced beef round (Australian beef, red meat) having a thickness of 0.2 cm and a longest side of 5 cm was immersed at 4°C for 16 hours. Subsequently, the beef was removed from the treatment liquid, placed in a steam convection oven, steam-heated in a 93°C steam atmosphere for 20 minutes, and then quickly frozen. In the comparative example, a sliced beef round was immersed in ion exchange water and treated in the same manner.

### 2) Block Beef Round

A treatment liquid prepared by dissolving glucose in ion exchange water to the concentration shown in Table 1 was injected using an injector into 40 g of a raw beef round (Australian beef, red meat) having a thickness of 2 cm or more to 50 w/w% relative to the initial weight (raw weight). Subsequently, the beef was placed in a steam convection oven, steam-heated in a 93°C steam atmosphere for 20 minutes, and then quickly frozen.

### 2. Retort Heating

100 g of each sliced beef round or block beef round treated in 1) above was packed in an aluminum retort pouch, N-Type (Plain) Standard Bag 13-18 (130 mm × 180 mm), hermetically sealed using a heat sealer, and then retort-heated to an F-value of 5 or more. Subsequently, the pouch was cooled, thereby giving a retort-packaged food (Examples 1-A to C).

### 3. Evaluation

The retort-packaged foods produced through the above steps 1 and 2 were each turned to a room temperature condition, and then the smell immediately after opening the retort pouch was evaluated according to the evaluation criteria. The evaluation results are shown in Table 1. The appearance was visually evaluated. The sliced beef rounds were directly eaten, while the block beef round was cut to a bite size and eaten, and the flavor was evaluated.

**[Table 1]**

| | | Example 1 | | | Comparative Example |
|---|---|---|---|---|---|
| | | A | B | C | |
| Food Material | | Sliced | Sliced | Block | Sliced |
| Treatment Liquid (w/w%) | TG | - | 0.02 | - | - |
| | Glucose | 0.5 | 0.5 | 0.05 | - |
| Treatment Method | | Immersion | Immersion | Injection | Immersion |
| Sensory Evaluation (Smell) | | 3.5 | 4.7 | 4.8 | 2.4 |

### 4. Results

As shown in Table 1, the evaluation score of the sliced beef round of the comparative example is 2.4, and a sulfur smell was clearly perceived. Further, the color changed to white, and a delicious-looking appearance as a sliced beef round was not maintained. In addition, an unpleasant flavor like an accumulated sulfur smell was perceived.

In contrast, the evaluation scores of the sliced beef rounds of Examples 1-A and B were as high as 3.5 and 4.7, respectively, and an unpleasant smell such as a sulfur smell was perceived only slightly or almost not perceived, each maintaining a favorable smell as a food. The evaluation score of the block beef round of Example 1-C was also as high as 4.8, and an unpleasant smell such as a sulfur smell was not perceived.

Further, in all of these meats, retort flavors were not perceived at all, and rather a savory roasted meat flavor was perceived. Further, as a result of browning, they had a more natural, delicious-looking appearance as compared with the sliced beef round of the comparative example.

### <Production of Retort-Packaged Softened Food>

### [Example 2]

### 1. Treatment

Each of enzyme treatment liquids prepared by dissolving an enzyme and also TG and/or glucose in a 40 mM sodium carbonate buffer (pH 9.0) to the concentrations shown in Tables 2 and 3 was used. In addition, each of enzyme treatment liquids prepared by adding cooking *sake*, *shochu*, and the like as additional additives to the concentrations shown in Table 4 was also used.

A raw chicken breast (domestic broiler chicken, skinless) was cut to a thickness of 2 cm or more, a longest side of 5 cm or more, and a weight of 20 g to 25 g. Into this chicken breast, the enzyme treatment liquid at 50 w/w% relative to the initial weight (raw weight) was injected using an injector. The chicken breast after the enzyme treatment liquid injection was further immersed in the enzyme treatment liquid, depressurized to -0.09 MPa, and then returned to normal pressure. The immersion in the enzyme treatment liquid was continued at 4°C for 15 to 20 hours, and then the chicken breast was removed from the enzyme treatment liquid. The chicken breast was placed in a steam convection oven, steam-heated in a 93°C steam atmosphere until the core temperature reached 90°C, and then quickly frozen, thereby giving a softened chicken breast. In the comparative examples, each of enzyme treatment liquids prepared by dissolving an enzyme and also TG and/or a yeast extract in a 40 mM sodium carbonate buffer (pH 9.0) to the concentrations shown in Table 3 was injected into a raw chicken breast and treated in the same manner.

### 2. Retort Heating

A total of 40 g of the softened chicken breast prepared in the above step 1 and 90 g of 1.4 w/w% xanthan gum (SAN ACE ES from San-Ei Gen F.F.I., Inc.) were packed in a retort-resistant plastic tray (100 mm × 65 mm × 30 mm), hermetically sealed using a heat sealer, and then retort-heated to an F-value of 5 or more. Subsequently, the pouch was cooled, thereby giving a retort-packaged softened food (Examples 2-A to J).

### 3. Evaluation

The retort-packaged softened foods produced through the above steps 1 and 2 were each turned to a room temperature condition, and then the smell, appearance, and softness immediately after opening the retort pouch were evaluated according to the evaluation criteria. The evaluation results are shown in Tables 2 to 4. In addition, each chicken breast was directly eaten to evaluate the flavor.

**[Table 2]**

| | | Examples | | | | | |
|---|---|---|---|---|---|---|---|
| | | A | B | C | D | E | F |
| Treatment Liquid (w/w%) | Papain | 0.01 | 0.01 | 0.01 | 0.01 | - | 0.01 |
| | Bromelain | - | - | - | - | 0.01 | - |
| | TG | 0.3 | - | 0.3 | 0.1 | 0.1 | - |
| | Glucose | 0.5 | 0.5 | - | 0.1 | 0.1 | - |
| | Maltose | - | - | - | - | - | 0.8 |
| Sensory Evaluation | Smell | 4.6 | 3.8 | 3.7 | 3.4 | 3.3 | 3.7 |
| | Appearance | 4.5 | 4.5 | 4.5 | 4.5 | 4.6 | 4.6 |
| | Softness | 4.5 | 4.7 | 4.5 | 4.8 | 4.7 | 4.6 |
| | Overall Evaluation | S | A | A | A | A | A |
| Hardness (Measured value: Pa) | | 3.7*10⁴ | 3.5*10⁴ | 3.7*10⁴ | 3.5*10⁴ | 3.4*10⁴ | 3.4*10⁴ |

**[Table 3]**

| | | Examples | | Comparative Examples | | | |
|---|---|---|---|---|---|---|---|
| | | G | H | a | b | c | d |
| Treatment Liquid (w/w%) | Papain | 0.01 | 0.01 | 0.01 | 0.01 | - | 0.01 |
| | Peptidase | 0.001 | 0.005 | - | 0.001 | 0.01 | - |
| | TG | 0.3 | 0.3 | - | - | 0.3 | - |
| | Glucose | 0.5 | 0.5 | - | - | 0.5 | - |
| | Yeast extract | - | - | - | - | - | 0.5 |
| Sensory Evaluation | Smell | 3.2 | 3.0 | 2.2 | 1.6 | 1.2 | 1.0 |
| | Appearance | 4.5 | 4.6 | 4.8 | 4.8 | 5.0 | 1.0 |
| | Softness | 4.5 | 4.6 | 4.8 | 4.9 | 1.0 | 4.4 |
| | Overall Evaluation | A | A | F | F | F | F |
| Hardness (Measured value: Pa) | | 3.7*10⁴ | 3.6*10⁴ | 3.1*10⁴ | 3.1*10⁴ | 8.3*10⁴ | - |

**[Table 4]**

| | | Examples | |
|---|---|---|---|
| | | I | J |
| Treatment Liquid (w/w%) | Papain | 0.01 | 0.01 |
| | TG | 0.3 | 0.3 |
| | Glucose | 0.5 | 0.5 |
| | Cooking *sake* | 0.5 | - |
| | Shochu | - | 0.5 |
| Sensory | Smell | 4.8 | 4.9 |
| Evaluation | Appearance | 4.7 | 4.7 |
| | Softness | 4.6 | 4.5 |
| | Overall Evaluation | s | s |
| Hardness (Measured value: Pa) | | 3.3*10⁴ | 3.3*10⁴ |

### 4. Results

As shown in Tables 2 to 4, the appearance evaluation scores of the chicken breasts of Examples 2-A to J were all 4.5 or more. No change or only a slight change was seen in the appearance, and they maintained the natural color and shape as a processed food comparable to an unsoftened food. In addition, the softness evaluation scores were also 4.5 or more, and they were all soft enough to be crushed with the tongue alone. In contrast, the chicken breasts of Comparative Examples 2-a to d were not favorable in terms of at least one of smell, appearance, and softness.

With respect to the smell, the evaluation scores of the chicken breasts of Examples 2-A to C, F, I, and J were 3.7 or more, and an unpleasant smell such as a sulfur smell was not perceived at all or almost not perceived, each maintaining a favorable smell as a food. In particular, in the chicken breasts of Examples 2-A, B, and F, the savory roasted flavor and the richness in taste increased, resulting in an excellent meat flavor. Further, also in the chicken breasts of Examples I and J, the flavor and aroma of cooking *sake* or *shochu* were added, resulting in an even more excellent meat flavor.

In addition, with respect to the chicken breasts of Examples 2-D, E, G, and H, although an unpleasant smell such as a sulfur smell was slightly perceived, they were suitable as processed foods of the invention, each maintaining a favorable smell as a food.

From the results of Example 2-A and Comparative Example 2-a, it was confirmed that in the case of softening a chicken breast with papain, when TG and glucose are used in combination, the generation of a sulfur smell is more suppressed. In addition, from the results of Comparative Example 2-c, it was confirmed that when peptidase (exo-type protease) is used, the chicken breast is hardly softened, and also the generation of a sulfur smell increases; therefore, in order to obtain a chicken breast softened enough to be crushed with the tongue, in which the generation of a sulfur smell is suppressed, it is preferable to use papain (endo-type protease) as in Example 2-A.

In addition, from the results of Example 2-G and Comparative Example 2-b, it was confirmed that also in the case of softening a chicken breast with papain and peptidase, when TG and glucose are used in combination, the generation of a sulfur smell is more suppressed. Further, from the results of Comparative Example 2-d, it was confirmed that even when a yeast extract is used in accordance with related art (JP-A-2006-109720), the generation of a sulfur smell cannot be sufficiently suppressed.

### [Example 3]

### Pork Round

### 1. Treatment

Each of enzyme treatment liquids prepared by dissolving an enzyme and also TG and/or glucose in a 40 mM sodium carbonate buffer (pH 9.0) to the concentrations shown in Table 5 was used.

A raw pork round (domestic pork, red meat) was cut to a thickness of 2 cm or more, a longest side of 7 cm or more, and a weight of 50 g to 55 g. The pork round was treated in the same manner as for the chicken breast of Example 2, including the enzyme treatment liquid injection and the like.

### 2. Retort Heating

A total of 50 g of the softened pork round prepared in the above step 1 and 80 g of 1.4 w/w% xanthan gum (SAN ACE ES from San-Ei Gen F. F. I., Inc.) were packed in a retort-resistant plastic tray (100 mm × 65 mm × 30 mm), hermetically sealed using a heat sealer, retort-heated to an F-value of 5 or more, and then cooled. Subsequently, the pouch was cooled, thereby giving a retort-packaged softened food (Examples 3-A to D).

### 3. Evaluation

The retort-packaged softened foods produced through the above steps 1 and 2 were each turned to a room temperature condition, and then the smell, appearance, and softness immediately after opening the retort pouch were evaluated according to the evaluation criteria. The evaluation results are shown in Table 5. In addition, the hardness (measured value) is also shown in Table 5. Further, the pork rounds were directly eaten to evaluate the flavor.

**[Table 5]**

| | | Examples | | | |
|---|---|---|---|---|---|
| | | A | B | C | D |
| Treatment Liquid (w/w%) | Papain | 0.01 | 0.01 | 0.01 | 0.01 |
| | TG | 0.1 | - | 0.1 | 0.01 |
| | Glucose | 0.5 | 0.5 | - | 0.1 |
| Sensory Evaluation | Smell | 4.7 | 3.8 | 3.5 | 3.0 |
| | Appearance | 4.6 | 4.6 | 4.6 | 4.7 |
| | Softness | 4.5 | 4.6 | 4.5 | 4.8 |
| | Overall Evaluation | S | A | A | A |
| Hardness (Measured value: Pa) | | 3.2*10⁴ | 3.1*10⁴ | 3.1*10⁴ | 2.9*10⁴ |

### 4. Results

As shown in Table 5, the appearance evaluation scores of the pork rounds of Examples 3-A to D were all 4.6 or more. No change or only a slight change was seen in the appearance, and they maintained the natural color and shape as a processed food comparable to an unsoftened food. In addition, the softness evaluation scores were also 4. 5 or more, and they were all soft enough to be crushed with the tongue alone.

With respect to the smell, the scores of the pork rounds of Examples 3-A to C were 3.5 or more, and an unpleasant smell such as a sulfur smell was not perceived at all or almost not perceived, each maintaining a favorable smell as a food. In particular, in Examples 3-A and 3-B containing glucose, an even better savory roasted flavor and more richness in taste were perceived.

### [Example 4]

### Beef Round

### 1. Treatment

Each of enzyme treatment liquids prepared by dissolving an enzyme and also TG and/or glucose in a 40 mM sodium carbonate buffer (pH 9.0) to the concentrations shown in Table 6 was used.

### 1) Sliced Beef Round

A raw sliced beef round (Australian beef, red meat) having a thickness of 0.2 cm and a longest side of 5 cm was immersed in the enzyme treatment liquid, depressurized to -0.09 MPa, and then returned to normal pressure. The immersion in the enzyme treatment liquid was continued at 4°C for 15 to 20 hours, and then the sliced beef was removed from the enzyme treatment liquid. The sliced beef was placed in a steam convection oven, steam-heated in a 93°C steam atmosphere for 15 minutes, and then quickly frozen.

### 2) Block Beef Round

100 g of a raw beef round (Australian beef, red meat) having a thickness of 2.5 cm or more and a longest side of 15 cm or more was treated in the same manner as for the chicken breast of Example 2, including the enzyme treatment liquid injection and the like.

### 2. Retort Heating

Each softened beef round prepared in the above step 1 and 200 g of 1.4 w/w% xanthan gum (SAN ACE ES from San-Ei Gen F.F.I., Inc.) were packed in an aluminum retort pouch, N-Type (Plain) Standard Bag 13-18 (130 mm × 180 mm), hermetically sealed using a heat sealer, and then retort-heated to an F-value of 5 or more. Subsequently, the pouch was cooled, thereby giving a retort-packaged softened food (Examples 4-A to D).

### 3. Evaluation

The retort-packaged softened foods produced through the above steps 1 and 2 were each turned to a room temperature condition, and then the smell, appearance, and softness immediately after opening the retort pouch were evaluated according to the evaluation criteria. The evaluation results are shown in Table 6. In addition, the hardness (measured value) is also shown in Table 6. Further, the beef rounds were directly eaten to evaluate the flavor.

**[Table 6]**

| | | Examples | | | |
|---|---|---|---|---|---|
| | | A | B | C | D |
| Beef | | Sliced Meat | | Block Meat | |
| Treatment Liquid (w/w%) | Papain | 0.2 | 0.1 | 0.02 | 0.02 |
| | TG | 0.5 | 0.5 | 0.3 | 0.3 |
| | Glucose | 1.5 | - | 0.8 | - |
| Sensory Evaluation | Smell | 4.5 | 3.6 | 4.4 | 3.5 |
| | Appearance | 4.5 | 4.2 | 4.7 | 3.9 |
| | Softness | 4.7 | 4.3 | 4.2 | 4.5 |
| | Overall Evaluation | S | A | S | B |
| Hardness (Measured value: Pa) | | - | - | 4.4*10⁴ | - |

### 4. Results

As shown in Table 6, the appearance evaluation scores of the sliced beef rounds and block beef rounds of Examples 4-A to D were all 3.9 or more. No change was seen in the appearance, only a slight change was seen in the appearance, or although a change was seen, the natural color and shape as a processed food comparable to an unsoftened food were maintained. In addition, the softness evaluation scores were also 4.2 or more, and they were all soft enough to be crushed with the tongue alone.

The smell scores were also 3.5 or more, and an unpleasant smell such as a sulfur smell was not perceived at all, almost not perceived, or slightly perceived, but each maintained a favorable smell as a food. In addition, in Examples 4-A and 4-C containing glucose, as compared with 4-B and 4-D, the savory roasted flavor and the richness in taste were perceived more strongly.

### [Example 5]

### Fishery Products

Each of enzyme treatment liquids prepared by dissolving an enzyme and also TG and/or glucose in a 40 mM sodium carbonate buffer (pH 9.4) to the concentrations shown in Table 7 was used.

### 1. Mackerel

### 1) Treatment

Into a raw chub mackerel (2 cm or more in maximum thickness, 9 cm or more in longest side), the enzyme treatment liquid at 10 w/w% relative to the initial weight (raw weight) was injected using an injector. The mackerel was further immersed in 150 ml of the enzyme treatment liquid, depressurized to -0.09 MPa, and then returned to normal pressure. The immersion in the enzyme treatment liquid was continued at 4°C for 15 to 20 hours, and then the mackerel was removed from the enzyme treatment liquid. The mackerel was placed in a steam convection oven, and, in a steam atmosphere heated from 60°C to 93°C over a heating time of 20 minutes, steam-heated until the core temperature reached 90°C, and then quickly frozen.

### 2) Retort Heating

40 g of the mackerel softened in 1) above was packed in a retort-resistant plastic tray (100 mm × 65 mm × 30 mm) together with 90 g of a 1.4 w/w% xanthan gum solution, and retort-heated to an F-value of 5 or more. Subsequently, the pouch was cooled, thereby giving a retort-packaged softened food (Example 5-A) .

### 2. Crab

### 1) Treatment

A boiled snow crab leg without the shell (0.5 cm or more in thickness, 7 cm or more in longest side) was immersed in the enzyme treatment liquid, depressurized to -0.09 MPa, and then returned to normal pressure. The immersion in the enzyme treatment liquid was continued at 4°C for 15 to 20 hours, and then the snow crab was removed from the enzyme treatment liquid. The snow crab was placed in a steam convection oven, steam-heated in a 93°C steam atmosphere until the core temperature reached 90°C, and then quickly frozen.

### 2) Retort Heating

A total of 50 g of the snow crab softened in 1 above and 80 g of 1.4 w/w% xanthan gum (SAN ACE ES from San-Ei Gen F.F.I., Inc.) were packed in a retort-resistant plastic tray (100 mm × 65 mm × 30 mm), hermetically sealed using a heat sealer, and then retort-heated to an F-value of 5 or more. Subsequently, the pouch was cooled, thereby giving a retort-packaged softened food (Example 5-B).

### 3. Scallop

### 1) Treatment

Into a raw scallop adductor (2 cm or more in thickness, 4 cm or more in longest side), the enzyme treatment liquid at 20 w/w% relative to the initial weight (raw weight) was injected using an injector. The scallop was further immersed in 150 ml of the enzyme treatment liquid, depressurized to -0.09 MPa, and then returned to normal pressure. The immersion in the enzyme treatment liquid was continued at 4°C for 15 to 20 hours, and then the scallop was removed from the enzyme treatment liquid. The scallop was placed in a steam convection oven, steam-heated in a 93°C steam atmosphere until the core temperature reached 90°C, and then quickly frozen.

### 2) Retort Heating

A total of 50 g of the scallop softened in 1 above and 80 g of 1.4 w/w% xanthan gum (SAN ACE ES from San-Ei Gen F. F. I., Inc.) were packed in a retort-resistant plastic tray (100 mm × 65 mm × 30 mm), hermetically sealed using a heat sealer, and then retort-heated to an F-value of 5 or more. Subsequently, the pouch was cooled, thereby giving a retort-packaged softened food (Example 5-C).

### 4. Evaluation

The retort-packaged softened foods produced in 1 to 3 above were each turned to a room temperature condition, and then the smell, appearance, and softness immediately after opening the retort pouch were evaluated according to the evaluation criteria. The evaluation results are shown in Table 7. In addition, the hardness (measured value) is also shown in Table 7. Further, each fishery product was directly eaten to evaluate the flavor.

**[Table 7]**

| | | Examples | | |
|---|---|---|---|---|
| | | A | B | C |
| Fishery Product | | Mackerel | Crab | Scallop |
| Treatment Liquid | Papain | 0.005 | 0.005 | 0.04 |
| | TG | 0.1 | 0.2 | 0.1 |
| (w/w%) | Glucose | 1.0 | 0.03 | 0.01 |
| Sensory Evaluation | Smell | 4.4 | 4.2 | 4.1 |
| | Appearance | 4.5 | 4.3 | 4.8 |
| | Softness | 4.9 | 4.9 | 4.3 |
| | Overall Evaluation | S | S | S |
| Hardness (Measured value: Pa) | | 2.1*10⁴ | 1.2*10⁴ | 3.6*10⁴ |

### 5. Results

As shown in Table 7, the appearance evaluation scores of the fishery products of Examples 5-A to C were all 4.3 or more. No change or only a slight change was seen in the appearance, and they maintained the natural color and shape as a processed food comparable to an unsoftened food. In addition, the softness evaluation scores were also 4. 3 or more, and they were all soft enough to be crushed with the tongue alone.

Further, the smell scores were also 4.1 or more, and an unpleasant smell such as a sulfur smell was not perceived at all or almost not perceived, each maintaining a favorable smell as a food. In addition, at the time of eating, an unpleasant flavor like an accumulated sulfur smell was not perceived.

### [Example 6]

### Beans

### 1. Enzyme Treatment Liquid

Each of enzyme treatment liquids prepared by dissolving TG and/or glucose in a 10 mM sodium citrate buffer (pH 5.0) having added thereto a 1 w/w% cellulase and a 1 w/w% hemicellulase to the concentrations shown in Table 8 was used.

### 2. Treatment and Retort Heating

1) 100 g of dry soybeans (domestic yellow soybeans) were immersed in 300 g of the enzyme-containing solution and allowed to stand at 4°C for 12 to 24 hours.
2) The above 1) was directly placed in a steam convection oven (RATIONAL Japan) (humidity: 100%) and incubated at 50°C for 1 hour to cause an enzymatic reaction.
3) The beans were washed with water, and the outer skins were removed.
4) The soybeans were placed in 300 g of water, placed in a saturated steam cooker (Miura Co., Ltd.), and heated at 120°C for 1 hour.
5) The beans were removed from water, packed in a retort-resistant plastic tray, hermetically sealed using a heat sealer, and then retort-heated to an F-value of 5 or more. Subsequently, the pouch was cooled, thereby giving a retort-packaged softened food (Examples 6-A to 6-C).

### 3. Evaluation

The retort-packaged softened foods produced through the above steps were each turned to a room temperature condition, and then the smell, appearance, and softness immediately after opening the retort pouch were evaluated according to the evaluation criteria. The evaluation results are shown in Table 8. In addition, the hardness (measured value) is also shown in Table 8. Further, each bean was directly eaten to evaluate the flavor.

**[Table 8]**

| | | Examples | | | Comparative Example |
|---|---|---|---|---|---|
| | | A | B | C | |
| Treatment Liquid (w/w%) | TG | 0.05 | 0.50 | 0.50 | - |
| | Glucose | - | - | 0.10 | - |
| Sensory Evaluation | Smell | 3.1 | 3.6 | 4.5 | 1.3 |
| | Appearance | 4.4 | 4.3 | 4.3 | 4.5 |
| | Softness | 4.6 | 4.3 | 4.3 | 4.8 |
| | Overall Evaluation | A | A | s | F |
| Hardness (Measured value: Pa) | | 5.4*10⁴ | 5.7*10⁴ | 5.8*10⁴ | 5.3*10⁴ |

### 4. Results

As shown in Table 8, the appearance evaluation scores of the bean of Examples 6-A to C were all 4.3 or more. No change or only a slight change was seen in the appearance, and they maintained the natural color and shape as a processed food comparable to an unsoftened food. In addition, the softness evaluation scores were also 4.3 or more, and they were all soft enough to be crushed with the tongue alone.

Further, the smell scores of the bean of Examples 6-B and C were 3.6 or more, and an unpleasant smell such as a sulfur smell was not perceived at all or almost not perceived, each maintaining a favorable smell as a food. In addition, in Example 6-C containing glucose, as compared with 6-A and 6-B, the savory roasted flavor and the richness in taste were perceived more strongly.

### INDUSTRIAL APPLICABILITY

The method of the invention makes it possible to provide a processed food in which a food material containing a protein as a main nutritional component, such as a meat, a fishery product, or a bean, is solid and has a certain size, and also retort smells and retort flavors are suppressed.

Further, according to the method of the invention, a retort-packaged softened food in which retort smells and retort flavors are suppressed can also be provided as a processed food. As a result, it also becomes easy to produce a processed food intended for those with chewing or swallowing difficulties, for example.

## Claims

1. A method for producing a processed food in which the generation of a sulfur smell is suppressed, comprising the following steps (A) and (B):
(A) a step of bringing a transglutaminase and/or a reducing sugar into contact with a solid food material containing a protein as a main nutritional component; and
(B) a step of subjecting the food material after the step (A) to a heat sterilization treatment.

2. A method for producing a processed food in which the generation of a sulfur smell is suppressed, comprising the following steps (C) and (D):
(C) a step of bringing an enzyme and also a transglutaminase and/or a reducing sugar into contact with a solid food material containing a protein as a main nutritional component; and
(D) a step of subjecting the food material after the step (C) to a heat sterilization treatment.

3. The method for producing a processed food according to claim 2, wherein the enzyme is one or more member selected from proteases, cellulases, or hemicellulases.

4. The method for producing a processed food according to claim 3, wherein the proteases are endo-type proteases.

5. The method for producing a processed food according to any one of claims 1 to 4, wherein in the step (A) or (C), *sake* and/or *shochu* is further brought into contact.

6. The method for producing a processed food according to any one of claims 1 to 5, wherein the heat sterilization treatment is a retort treatment.

7. The method for producing a processed food according to any one of claims 1 to 6, wherein the food material containing a protein as a main nutritional component is a meat, a fishery product, or a bean.

8. The method for producing a processed food according to any one of claims 1 to 7, wherein the food material is any one of the following (a) to (c):
(a) in the case of a meat, 0.1 cm or more in thickness and 1.0 cm or more in longest side;
(b) in the case of a fishery product, 0.1 cm or more in thickness and 1.0 cm or more in longest side; and
(c) in the case of a bean, 4.9 mm or more in longest diameter.

9. The method for producing a processed food according to any one of claims 2 to 8, wherein the produced processed food is a processed food that maintains the original appearance of the food material and has been softened to a hardness that allows for uniform crushing with the tongue alone.

10. The method for producing a processed food according to claim 9, wherein the hardness that allows for uniform crushing with the tongue alone is any one of the following 1) to 3):
1) in the case where the food material is a fishery product, the fishery product has a hardness of 5.0 × 10⁴ Pa or less;
2) in the case where the food material is a meat, the meat has a hardness of 6.0 × 10⁴ Pa or less; and
3) in the case where the food material is a bean, the bean has a hardness of 6.0 × 10⁴ Pa or less.

11. A processed food obtainable by the method according to any one of claims 1 to 10.
